# EUROPEAN PATENT APPLICATION

(11) **EP 2 669 803 A2**
(43) Date of publication of application: **04.12.2013**
(21) Application number: 13002795.6
(22) Date of filing: 29.05.2013
(51) Int. Cl.: G06F 9/54

(54) **Unifying programming models in connectivity framework**

(30) Priority: 31.05.2012 US 201213484718
(71) Applicant: SAP AG, 69190 Walldorf (DE)
(72) Inventor: Seifert, Hartwig, 69190 Walldorf (DE); Böhrer, Otto, 69190 Walldorf (DE); Godlinski, Artur, 69190 Walldorf (DE); Kessler, Joerg, 69190 Walldorf (DE); Kisker, Jens, 69190 Walldorf (DE); Kunz, Thomas, 69190 Walldorf (DE); Pritzkau, Eugen, 69190 Walldorf (DE); Rossmanith, Stefan, 69190 Walldorf (DE); Tran, Duong-Han, 69190 Walldorf (DE)
(74) Representative: Müller-Boré & Partner Patentanwälte

(57) **Abstract**

Methods, systems, and apparatus, including computer programs encoded on a computer storage medium, for using point-to-point communication in a communication framework to unify programming models. In a general aspect, a method for unifying programming models in connectivity framework can include receiving a message in a first protocol at a first computing system in the distributed computing environment. The message is associated with a connection request received from a second computing system in the distributed computing environment. In a communication framework of the first computing system, the first protocol is transformed into a second protocol of the message using a point-to-point communication of the communication framework. The message can then be output in the second protocol.

## Description

### TECHNICAL BACKGROUND

This disclosure relates to unifying programming models in connectivity framework and, more particularly, using point-to-point communications in connectivity framework.

### BACKGROUND

In many instances, a communication framework is used to connect applications to partners using one or more communication protocols. The protocols are related to various programming models. The programming models associated with various protocols have different features, for example, such as sequencing, routing, session handling, custom headers, update task handling, and others.

### SUMMARY

This disclosure describes systems, methods, apparatus, and computer-readable media for using point-to-point communication in a communication framework to unify programming models. In many instances, a communication framework allows applications to communicate with partners using various protocols, for example, web service (WS) protocol, exchange infrastructure (XI) protocol, and others. These protocols can have different features and require particular support from the communication framework. Conventionally, the communication framework supports multi-protocol communication using a process integration platform, which operates as an intermediate hub. The hub can be configured according to the local programming model or protocol and use a neutral format for adapting different protocols. The involved conversion and adaptation process can be replaced and improved using a unified programming model for WS protocol, XI protocol and other protocols communication. The unified programming model can enable partners and applications to communicate without reliance on a protocol switch

In one general aspect, a method for unifying programming models in connectivity framework can include receiving a message in a first protocol at a first computing system in the distributed computing environment. The message is associated with a connection request received from a second computing system in the distributed computing environment. In a communication framework of the first computing system, the first protocol is transformed into a second protocol of the message using a point-to-point communication of the communication framework. The message can then be output in the second protocol.

These and other embodiments can each optionally include one or more of the following features. In some embodiments, a connection request from an application can be received and process using a web service proxy at runtime. The message can be dispatched in the second protocol to a number of connectors. The first message can be outputted in the second protocol to an external partner via the number of connectors. In some embodiments, a connection request from an external partner with a number of connectors is received. The number of connectors can be adapted to various protocols. The connection request is processed using a web service proxy at runtime. The message can be received at one of the connectors in the first protocol. The message is associated with the connection request. The message can be outputted in the second protocol to an application.

Some other features may include the first protocol including a web service protocol and the second protocol including one of an exchange infrastructure protocol, an HTTP protocol, a JMS protocol, an SMTP protocol, a TCP protocol, or an RFC protocol. In some implementations, the first protocol can be an XI protocol and the second protocol can be one of a WS protocol, an HTTP protocol, a JMS protocol, an SMTP protocol, a TCP protocol, or an RFC protocol.

Various embodiments of a unified programming model according to the present disclosure may have one or more of the following features. For example, the unified programming model can use point-to-point (P2P) communication via various protocols (e.g., WS, XI, etc.). In some embodiments, a communication partner can be an exchange infrastructure platform, so that the communication is, from the backend perspective, a P2P communication, and is a mediated communication from an end-to-end perspective. The unified programming model can perform communication connection in a synchronous or asynchronous manner, provide different service qualities (e.g., best effort, exactly once, exactly once in order), and support transactional behavior. In some specific aspects, the unified programming model can support endpoint compatibility, for example, service endpoint path for XI connectivity.

These general and specific aspects may be implemented using a device, system or method, or any combinations of devices, systems, or methods. For example, a system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions. The details of one or more implementations are set forth in the accompanying drawings and the description below. Other features, objects, and advantages will be apparent from the description and drawings, and from the claims.

### DESCRIPTION OF DRAWINGS

FIG. 1 illustrates an example distributed computing environment for implementing a unified programming model in a communication framework;

FIG. 2 illustrates an example architecture of a communication framework operable to unify programming models in outbound communication;

FIG. 3 illustrates an example architecture of a communication framework operable to unify programming models in inbound communication;

FIG. 4A illustrates an example method for outbound communication using unifying programming models; and

FIG. 4B illustrates an example method for inbound communication using unifying programming models.

### DETAILED DESCRIPTION

This specification describes systems, methods, apparatus, and computer-readable media for using point-to-point communication in a communication framework to unify programming models. In many instances, a communication framework allows applications to communicate with partners using various protocols, for example, web service (WS) protocol, exchange infrastructure (XI) protocol, and others. These protocols can have different features and require particular support from the communication framework. Conventionally, the communication framework supports multi-protocol communication using a process integration platform, which operates as an intermediate hub. The hub can be configured according to the local programming model or protocol and use a neutral format for adapting different protocols. The involved conversion and adaptation process can be replaced and improved using a unified programming model for WS protocol, XI protocol and other protocols communication. The unified programming model can enable partners and applications to communicate without reliance on a protocol switch.

The WS protocol may refer to communication between web services using SOAP messages. In other words, a protocol comprising a WS protocol may comprise SOAP.

P2P communication may be understood as communication between a sender and a recipient without an intermediary. The intermediary may be a process integration platform, possibly including an integration server. Conventional messaging (involving an integration server and/or the XI protocol without P2P communication) may be further understood with reference to EP 2423817 or US 20120215581. When sending messages through an intermediary, it is possible that the recipient is not directly addressed. Instead, the intermediary (e.g. the integration server) is addressed. The intermediary then determines the recipient based on the content of the message and forwards the message to the recipient. The intermediary may process the message by including data in the message indicating that the message was processed by the intermediary.

In P2P communication, messages are not relayed through an intermediary, but instead addressed directly to a recipient. The sender may handle aspects of routing and may structure messages so that, from the perspective of the recipient, the messages appear to have been relayed through an intermediary (e.g. an integration server). The receiver may be directly addressed, e.g. via an interface name, an alias, or a component.

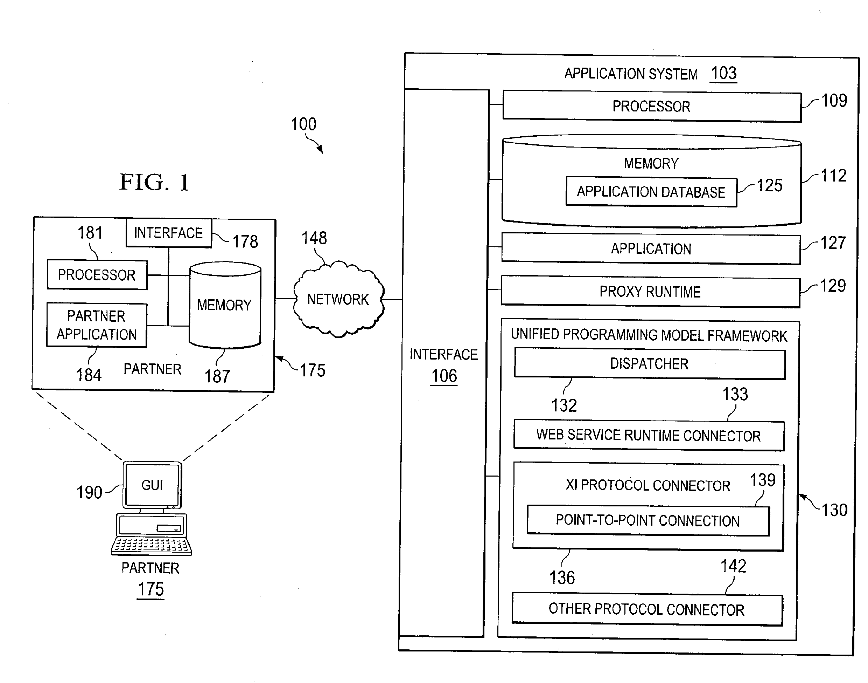

FIG. 1 illustrates an example environment 100 for implementing a unified programming model in a communication framework. The illustrated environment 100 includes, or is communicably coupled with, a partner 175, and an application system 103. At least some of the communications between the application system 103 and the partner 175 may be performed across or via network 148. In general, environment 100 depicts an example configuration of a system for using unified communication models to connect applications in the application system 103 with a partner 175. The environment 100 is an example, and in alternative implementations, the elements illustrated in FIG. 1 may be included in or associated with different and/or additional servers, clients, networks, and locations other than those as shown. For example, one or more of the components illustrated within the application system 103, the partner 175, or any of the other illustrated components, may be located in multiple or different servers, cloud-based networks, or other locations accessible to the application system 103 (e.g., either directly or indirectly via network 148).

At a high level, the application system 103 can receive inbound communication from the partner 175 or send outbound communication to the partner 175 via the network 148. The inbound and outbound communication can include content of various protocols, such as WS protocol, XI protocol, and others. The application system 103 includes an application 127 and a unified programming model framework 130. The application 127 can use the unified programming model framework 130 to communicate with the partner 175 in various protocols, without conversion to a neutral format (e.g., at a hub where a neutral format for different protocols can be used). The unified programming model framework 130 can offer compatible communication using point-to-point (P2P) communication in various protocols (e.g., XI 3.0 protocol). Referring first to the partner 175, the partner 175 includes a memory 187, a processor 181, a partner application 184, and an interface 178.

The memory 187 of the partner 175 stores data and program instructions, rules associated with inbound and/or outbound communication. The memory 187 may include any memory or database module and may take the form of volatile or non-volatile memory including, without limitation, magnetic media, optical media, random access memory (RAM), read-only memory (ROM), removable media, or any other suitable local or remote memory component. The memory 187 may store various objects, object models, and data, including classes, frameworks, applications, backup data, business objects, jobs, web pages, web page templates, database tables, process contexts, repositories storing services local to the partner 175, and any other appropriate information including any parameters, variables, algorithms, instructions, rules, constraints, or references thereto associated with the partner 175 and its functionality. In some implementations, including a cloud-based system, some or all of the memory 187 may be stored remote from the partner 175, and communicably coupled to the partner 175 for usage. Some or all of the elements may be stored external to the memory 187, for example, over an internet storage.

The processor 181 performs analysis and data extraction related to the partner application 184. Although illustrated as a single processor 181 in the partner 175, two or more processors may be used in the partner 175 according to particular needs, desires, or particular embodiments of environment 100. The processor 181 may be a central processing unit (CPU), a blade, an application specific integrated circuit (ASIC), a field-programmable gate array (FPGA), or another suitable component. Generally, the processor 181 executes instructions and manipulates data to perform the operations of the partner 175 and, specifically, the functionality associated with the partner application 184.

The GUI 190 associated with the partner 175 includes a graphical user interface operable to, for example, allow the partner 175 to interface with at least a portion of the partner application 184, and/or the associated operations and functionality. Generally, the GUI 190 provides the particular user with an efficient and user-friendly presentation of business data provided by or communicated within the system. The GUI 190 may include a plurality of customizable frames or views having interactive fields, pull-down lists, and buttons operated by the user. For example, the GUI 190 may provide interactive elements that allow a user to interact with a particular component within and/or external to environment 100. Different portions of the corresponding component's functionality may be presented and accessible to the user through the GUI 190, such as through the partner application 184 (e.g., a web browser).

Generally, the GUI 190 may also provide general interactive elements that allow a user to access and utilize various services and functions of a particular component. In some instances, the partner application 184 may be used to access various portions of the application system 103. In some instances, the partner application 184 may be an agent or client-side version of the application 127 or other suitable component of the application system 103. The GUI 190 may present the information of the partner application 184 for viewing and interaction. In general, the GUI 190 is often configurable, supports a combination of tables and graphs (bar, line, pie, status dials, etc.), and is able to build real-time portals, where tabs are delineated by key characteristics (e.g., site or micro-site). Therefore, the GUI 190 contemplates any suitable graphical user interface, such as a combination of a generic web browser, intelligent engine, and command line interface (CLI) that processes information in the platform and efficiently presents the results to the user visually.

Turning now to the application system 103, in general, the application system 103 is any server or system that stores, manages, and executes functionality associated with the application 127 and the unified programming model framework 130. Additionally, the application system 103 may execute one or more applications 127. For example, each application system 103 may be a Java® 2 Platform, Enterprise Edition (J2EE)-compliant application server that includes Java® technologies such as Enterprise JavaBeans® (EJB), J2EE Connector Architecture (JCA), Java® Messaging Service (JMS), Java® Naming and Directory Interface (JNDI), and Java® Database Connectivity (JDBC). In some instances, each application system 103 may store a plurality of various applications; while in other instances, the application system 103 may be a dedicated server meant to store and execute the unified programming model framework 130 for a particular platform or application and its related functionality. In some instances, the application system 103 may include a web server or be communicably coupled with a web server, where one or more of the applications 127 associated with the application system 103 represent web-based (or web-accessible) applications accessed and executed through requests and interactions received on the partner 175, executing a partner application 184 operable to interact with the programmed tasks or one or more applications 127.

At a high level, the application system 103 includes an electronic computing device operable to receive, transmit, process, store, or manage data and information associated with the environment 100. The application system 103 illustrated in FIG. 1 can be responsible for receiving application-related requests from one or more partners 175 (as well as any other entity or system interacting with the application system 103, including desktop or mobile client systems), responding to the received requests by processing said requests in the associated application 127, and sending the appropriate responses from the appropriate component back to the requesting partner 175 or other requesting system. Components of the application system 103 can also process and respond to local requests from a user locally accessing the server 103. Accordingly, in addition to requests from the partner 175 illustrated in FIG. 1, requests associated with a particular component may also be sent from internal users, external or third-party customers, and other associated business applications, business processes, as well as any other appropriate entities, individuals, systems, or computers. In some instances, the application 127 or the client application 173 may be web-based applications executing functionality associated with a networked or cloud-based business process.

As used in this present disclosure, the term "computer" is intended to encompass any suitable processing device. For example, although FIG. 1 illustrates a single application system 103, environment 100 can be implemented using any number of servers, as well as computers other than servers, including a server pool. Indeed, the application system 103 may be any computer or processing device such as, for example, a blade server, general-purpose personal computer (PC), Macintosh®, workstation, UNIX-based workstation, or any other suitable device. In other words, the present disclosure contemplates computers other than general purpose computers, as well as computers without conventional operating systems. Further, the illustrated application system 103 may be adapted to execute any operating system, including Linux, UNIX, Windows®, Mac® OS, iOS, or any other suitable operating system.

In the illustrated implementation of FIG. 1, the application system 103 includes an interface 106, a processor 109, a memory 112, the application 127, a proxy runtime 129, and the unified programming model framework 130. In some instances, the application system 103 and its illustrated components may be separated into multiple components executing at different servers and/or systems. For example, while FIG. 1 illustrates the application 127 and the unified programming model framework 130 as separate components, other example implementations can include the unified programming model framework 130 within a separate system, as well as within as part of the application 127's inherent functionality. Thus, while illustrated as a single component in the example environment 100 of FIG. 1, alternative implementations may illustrate the application system 103 as including multiple parts or portions, accordingly.

FIG. 1 depicts a server-client environment, but could also represent a cloud computing network. Various other implementations of the illustrated environment 100 can be provided to allow for increased flexibility in the underlying system, including multiple application systems 103 performing or executing one or more additional or alternative instances of the unified programming model framework 130 for one or more different platforms, as well as multiple instances of the application 127 and its related functionality. In those instances, the different application systems 103 may communicate with each other via a cloud-based network or through the connections provided by network 148.

The interface 106, similar to the interface 178, is used by the application system 103 to communicate with other systems in a client-server or other distributed environment (including within environment 100) connected to the network 148 (e.g., one of the partners 175, as well as other systems communicably coupled to the network 148). The interface 106 generally includes logic encoded in software and/or hardware in a suitable combination and operable to communicate with the network 148. More specifically, the interface 106 may include software supporting one or more communication protocols associated with communications such that the network 148 or the interface's hardware is operable to communicate physical signals within and outside of the illustrated environment 100.

Generally, the application system 103 may be communicably coupled with the network 148 that facilitates wireless or wireline communications between the components of the environment 100 (i.e., between the application system 103 and one or more partners 175), as well as with any other local or remote computer, such as additional clients, servers, or other devices communicably coupled to the network 148, including those not illustrated in FIG. 1. In the illustrated environment, the network 148 is depicted as a single network, but may be included of more than one network without departing from the scope of this disclosure, so long as at least a portion of the network 148 may facilitate communications between senders and recipients. In some instances, one or more of the components associated with the application system 103 may be included within the network 148 as one or more cloud-based services or operations.

The network 148 may be all or a portion of an enterprise or secured network, while in another instance, at least a portion of the network 148 may represent a connection to the Internet. In the illustrated example, at least a portion of the network 148 includes a portion of a cellular or mobile data network or other network capable of relaying SMS messages. In some instances, a portion of the network 148 may be a virtual private network (VPN). Further, all or a portion of the network 148 can include either a wireline or wireless link. Example wireless links may include 802.11/b/g/n, 802.20, WiMax®, and/or any other appropriate wireless link. In other words, the network 148 encompasses any internal or external network, networks, sub-network, or combination thereof operable to facilitate communications between various computing components inside and outside the illustrated environment 100. The network 148 may communicate, for example, Internet Protocol (IP) packets, Frame Relay frames, Asynchronous Transfer Mode (ATM) cells, voice, video, data, and other suitable information between network addresses. The network 148 may also include one or more local area networks (LANs), radio access networks (RANs), metropolitan area networks (MANs), wide area networks (WANs), all or a portion of the Internet, and/or any other communication system or systems at one or more locations.

As illustrated in FIG. 1, the application system 103 includes a processor 109. Although illustrated as a single processor 109 in the application system 103, two or more processors may be used in the application system 103 according to particular needs, desires, or particular embodiments of environment 100. The processor 109 may be a central processing unit (CPU), a blade, an application specific integrated circuit (ASIC), a field-programmable gate array (FPGA), or another suitable component. Generally, the processor 109 executes instructions and manipulates data to perform the operations of the application system 103 and, specifically, the functionality associated with the corresponding application 127 and the unified programming model framework 130. In one implementation, the server's processor 109 executes the functionality required to receive inbound communications from and send outbound communications to the partner 175, as well as the functionality required to perform the operations of the associated application 127 and the unified programming model framework 130, among others.

Regardless of the particular implementation, "software" may include computer-readable instructions, firmware, wired or programmed hardware, or any combination thereof on a tangible and non-transitory medium operable when executed to perform at least the processes and operations described herein. Indeed, each software component may be fully or partially written or described in any appropriate computer language including C, C++, Java®, Visual Basic, assembler, Perl®, any suitable version of 4GL, as well as others. It will be understood that while portions of the software illustrated in FIG. 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components, as appropriate. In the illustrated environment 100, each processor 109 executes the corresponding unified programming model framework 130 and the application 127 stored on the associated application system 103. In some instances, a particular application system 103 may be associated with the execution of two or more applications 127 (and other related components), as well as one or more distributed applications executing across two or more servers executing the functionality associated with the application system 103.

At a high level, each application 127 is any application, program, module, process, or other software that may execute, change, delete, generate, or otherwise manage information associated with a particular application system 103. In particular, business processes communicate with other users, applications, systems, and components to send, receive, and process events. In some instances, a particular application 127 may operate in response to and in connection with one or more requests received from an associated partner 175 or other remote client. Additionally, a particular application 127 may operate in response to and/or in connection with one or more requests received from other application applications 127 external to the application system 103. In some instances, the application 127 may request additional processing or information from an external system or application. In some instances, one of more of the application applications 127 may represent a web-based application accessed and be executed by remote partners 175 via the network 148 (e.g., through the Internet, or via one or more cloud-based services associated with the application 127). Further, while illustrated as internal to the application system 103, one or more processes associated with a particular application 127 may be stored, referenced, or executed remotely. For example, a portion of a particular application 127 may be a web service that is remotely called, while another portion of the application 127 may be an interface object or agent bundled for processing at a remote system (not illustrated), , or a particular partner 175 (e.g., the partner application 184). Moreover, any or all of a particular application 127 may be a child or sub-module of another software module or enterprise application (not illustrated) without departing from the scope of this disclosure. Still further, portions of the particular application 127 may be executed or accessed by a user working directly at the application system 103, as well as remotely at a corresponding partner 175.

The proxy runtime 129 can be a proxy or a proxy server using certain protocols (e.g., WS, XI, HTTP, etc.) to relay request from clients (e.g., the partner 175) seeking resources from the application system 103 or other servers. In some implementations, the proxy runtime 129 can perform a role similar to a network switch in linking the partner 175 with the application system 103. The proxy runtime 129 may filter traffic by IP address or protocol at runtime. For example, the proxy runtime 129 can be configured to allow only certain protocol communication to pass through. If a request can be validated by the filter, the proxy runtime 129 can provide the requested resource by connecting to the application system 103 and requesting the service on behalf of the partner 175. In some implementations, the proxy runtime 129 can serve as an intermediate caching to accelerate service requests by retrieving content saved from a previous request made by the partner 175 or other clients.

The unified programming model framework 130 includes a dispatcher 132, a web service runtime connector 133, an XI protocol connector 136, and other protocol connectors 142. The unified programming model framework 130 can enable point-to-point communication between the partner 175 and the application 127. In some implementations, the unified programming model framework 130 can be a simple object access protocol (SOAP) connectivity framework. The SOAP connectivity framework can enable extensibility for security and WS-routing among extensions under development. The SOAP connectivity framework can be used over various transport protocols such as WS, XI, HTTP, SMTP, TCP, and others, for neutrality. Using the SOAP connectivity framework over WS may be understood as using the SOAP connectivity framework to send SOAP messages. In addition, the SOAP can allow for various programming models and therefore be used to unify different programming models in the connectivity framework. In a general aspect, the SOAP architecture can include layers of specifications, such as for message format, message exchange patterns, underlying transport protocol bindings, message processing models, and protocol extensibility.

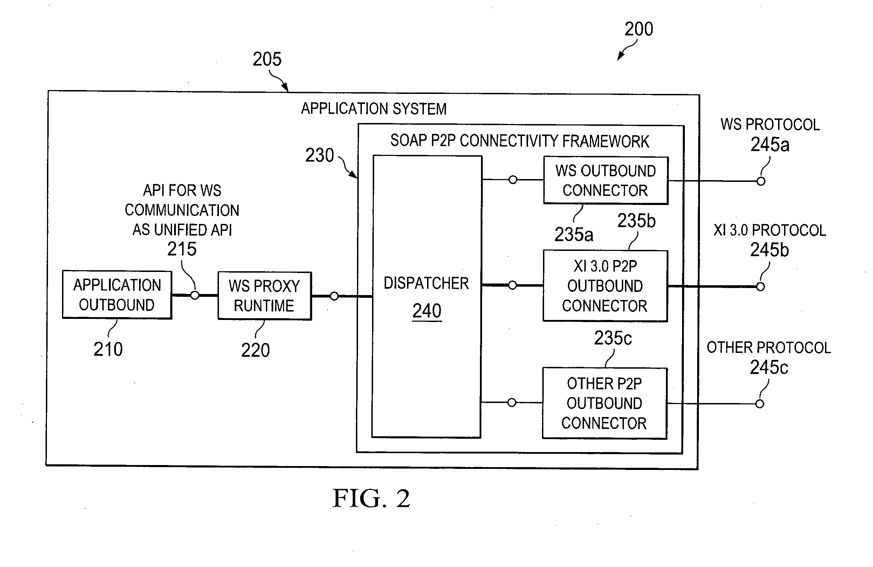

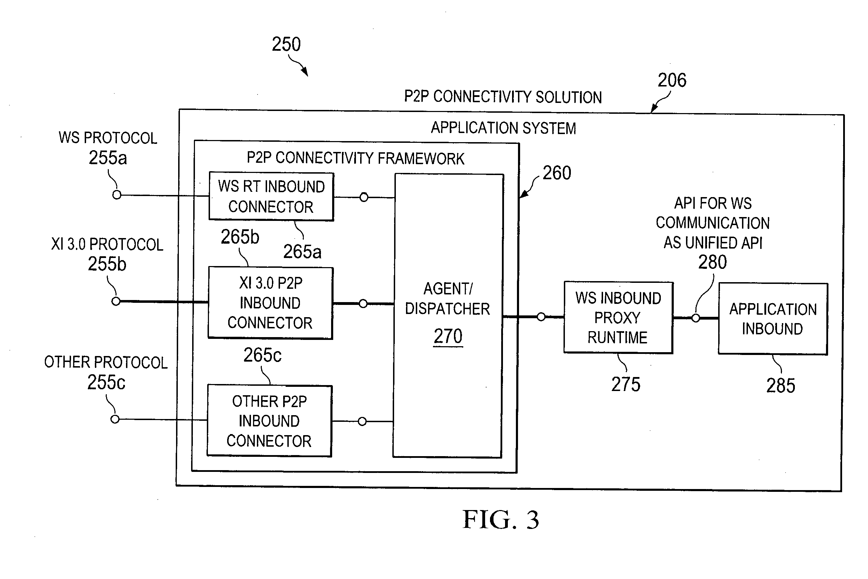

The dispatcher 132 is included in the unified programming model framework 130 for dispatching programming models to specific protocol connectors. For example, the dispatcher 132 can dispatch inbound or outbound communications with WS connectors, XI connectors, and other protocol connectors such as HTTP, SMTP, JMS, or TCP. Two example embodiments are illustrated in FIG. 2 and FIG. 3. In general, the dispatcher 132 can be threads, processes, or data flows for accessing system resources (e.g., processor time, communication bandwidth, etc.). The dispatcher 132 can be a module that gives control of the CPU to the process selected by a short-term scheduler. The dispatcher 132 can include functions of, besides dispatching programming models, switching context, switching to user mode, and jumping to the proper location in programs for restarting.

The web service runtime connector 133 connects WS protocol messages with the dispatcher 132 for communication. The web service may use Extensible Markup Language (XML) messages that follow the SOAP standard. In such implementations, there can be a machine-readable description of the operations offered by the service written in the Web Services Description Language (WSDL). The latter may not be a requirement of a SOAP endpoint, but it can be a prerequisite for automated client-side code generation in many Java and .NET SOAP frameworks (frameworks such as Apache Axis2, Apache CXF, and Spring being notable exceptions). Some industry organizations, such as the WS-I, mandate both SOAP and WSDL in their definition of a Web service. The web service runtime connector 133 can provide point-to-point protocol for programming models.

The XI protocol connector 136 connects XI protocol messages with the dispatcher 132 for communication. The XI protocol connector 136 can include a point-to-point connection 139 to enable point-to-point communication. In some implementations, the application system 103 can include an exchange infrastructure to support the XI protocol connector 136. The exchange infrastructure can include an integration server, a local integration engine, an integration builder repository and directory, a runtime workbench, a system landscape directory, an adapter engine and framework, a proxy runtime and a web start. The XI protocol connector 136 can receive outbound communication from the dispatcher 132 and send out messages in XI protocol, or receive inbound messages in XI protocol and send the communication to the dispatcher 132. The other protocol connector 142 can connect messages of various protocols, (e.g., HTTP, JMS, SMTP, TCP, among others) with the dispatcher 132 for communication.

The unified programming model framework 130 can provide compatibility to the application system 103 according to certain criteria. For example, the criteria can be quality of service, which can be measured using best effort, exactly once, exactly once in order, and other aspects. The criteria can also include synchronous and asynchronous communication, as well as transactional behavior. End point compatibility can also be included. For example, service endpoint path for XI connectivity can be kept stable compared with other process integration methods.

The memory 112 of the illustrated application system 103 stores the application database 125, and other data and program instructions, as well as metadata associated with unified programming model framework 130. The memory 112 may include any memory or database module and may take the form of volatile or non-volatile memory including, without limitation, magnetic media, optical media, random access memory (RAM), read-only memory (ROM), removable media, or any other suitable local or remote memory component. The memory 112 may store various objects, object models, and data, including classes, frameworks, applications, backup data, business objects, jobs, web pages, web page templates, database tables, process contexts, repositories storing services local to the application system 103, and any other appropriate information including any parameters, variables, algorithms, instructions, rules, constraints, or references thereto associated with the purposes of the application system 103 and its functionality. In some implementations, including a cloud-based system, some or all of the memory 112 may be stored remote from the application system 103, and communicably coupled to the application system 103 for usage. Specifically, memory 112 can store unified programming model framework 130. Some or all of the elements illustrated within memory 112 may be stored external to the memory 112. These items are made accessible to the unified programming model framework 130.

Returning to the partner 175 illustrated in FIG. 1, the environment may include one or more partners 175. Each partner 175 may be any computing device operable to connect to or communicate with at least one of the application system 103 using a wireline or wireless connection directly or via the network 148, or another suitable communication means or channel. In some instances, the partner 175 may be a part of or associated with a business process involving one or more of the applications 110, or alternatively, a remote developer or user associated with the application 127, for example, the partner application 184. It will be understood that there may be any number of partners 175 associated with, or external to, environment 100. For example, while illustrated environment 100 includes a partner 175, alternative implementations of environment 100 may include multiple sellers or customers communicably coupled to the one or more of the systems illustrated. In some instances, one or more partners 175 may be associated with administrators of the environment, and may be capable of accessing and interacting with the settings and operations of the unified programming model framework 130, one or more applications 127, and/or other components of the illustrated environment 100. Additionally, there may also be one or more additional partners 175 external to the illustrated portion of environment 100 capable of interacting with the environment 100 via the network 148.

As used in this disclosure, each partner 175 is intended to encompass a personal computer, touch screen terminal, workstation, network computer, kiosk, wireless data port, smart phone, personal data assistant (PDA), one or more processors within these or other devices, or any other suitable processing device. For example, each partner 175 may include a computer that includes an input device, such as a keypad, touch screen, mouse, or other device that can accept user information, and an output device that conveys information associated with the operation of one or more partner applications 184, and/or the partner 175 itself, including digital data, visual information, or the GUI 190. Both the input and output device may include fixed or removable storage media such as a magnetic storage media, CD-ROM, or other suitable media, to both receive input from and provide output to users of partner 175 through the display, namely, the GUI 190. The client's processor 181, interfaces 178, and memory 187 may be similar to or different from those described in connection with the other components illustrated in FIG. 1, although alternative implementations of one or more of these components may be used, as well as implementations where additional components may also be included.

FIG. 2 illustrates an example architecture 200 of a communication framework operable to unify programming models in outbound communication. The example architecture 200 can be applied to the application system 103 of the example environment 100 as shown in FIG. 1. The example architecture 200 includes an application system 205 and external connections 245a, 245b and 245c. The application system 205 includes an application 210, a web service proxy 220 and a connectivity framework 230. These components may be similar to comparable parts of the application system 103 in FIG. 1. In this embodiment, the application 210 is sending outbound communication to the connectors 245a-c. The application 210 can send a request or a message to an application programming interface (API) 215 for unified communication. The API 215 can be a source code-based specification intended to be used as an interface by software components to communicate with each other. The API 215 may include specifications for routines, data structures, object classes, and variables. The API 215 may take various forms, including POSIX, Windows API, libraries of a programming language, or others. The request or message may describe communication interface, for example, operation to be called, exchange message type, metadata description, among others. The request or message is then sent to the web service proxy 220 at runtime.

The web service proxy 220 can instantiate a proxy, for example, to obtain certain add-on objects for certain server features. The proxy may be associated with the protocol carried with the request or message sent from the application 210. In some implementations, the carried protocol can be a WS protocol, XI protocol, among others. In some implementations, HTTP protocols or other transport protocol may be used on a lower level, for example, binding for transport means of the WS protocol and the XI protocol. After the proxy is called at the web service proxy 220, the request or message is sent to the connectivity framework 230, which includes a dispatcher 240 and a number of connectors 235a, 235b, and 235c. The dispatcher 240 can switch the request or message from the original protocol to other protocols. In some implementations, the dispatcher 240 uses point-to-point communications for the switching operation. For example, the dispatcher 240 can switch WS protocol with XI protocol and send the information to the WS outbound connector 235a and/or to the XI P2P outbound connector 235b. In some other instances, the dispatcher 240 can switch other protocols with WS protocol or XI protocol and send the information to the other protocol connector 235c. The connectors 235a, 235b, or 235c then can connect with external partners through connectors 245a, 245b, and 245c, respectively.

FIG. 3 illustrates an example architecture 250 of a communication framework operable to unify programming models in inbound communication. The example architecture 250 can be the reverse version of the example architecture 200 when communication is sent from external partners to reach the application 285. Like the architecture 200, the example architecture 250 an application system 206 and connections 255a, 255b and 255c. The application system 206 includes an application 285, a web service proxy 275 and a connectivity framework 260. These components may be similar to comparable parts of the application system 205 in FIG. 2 and 103 in FIG. 1. In this embodiment, the application 285 is receiving inbound communication from the connectors 255a-c. An external partner can send a request or message to the connectors 255a-c. Each connector 255a-c can receive communications of certain protocol, such as WS protocol, XI protocol, among others. For example, the WS protocol connector 255a can send communications to the WS runtime inbound connector 265a of the connectivity framework 260. Similarly, the XI protocol connector 255b can send communications to the XI P2P inbound connector 265b; and other protocol connector 255c can send communications to other P2P inbound connector 265c. The inbound connectors 265a, 265b, and 265c send requests or messages to the agent/dispatcher 270 that switches the original protocol to another protocol for the WS inbound proxy 275. The switching operation of the agent/dispatcher 270 can be similar to the operation done by the dispatcher 240 of FIG. 2.

The communications from the WS inbound proxy is then received by the API 280 for unifying WS communication. The API 280 can be the same as or similar to the API 215. The Inbound communication can then reach the application 285 in a standard form. The API 280 can be a source code-based specification intended to be used as an interface by software components to communicate with each other. The API 280 may include specifications for routines, data structures, object classes, and variables. The API 280 may take various forms, including POSIX, Windows API, libraries of a programming language, or others. The request or message may describe communication interface, for example, operation to be called, exchange message type, metadata description, among others.

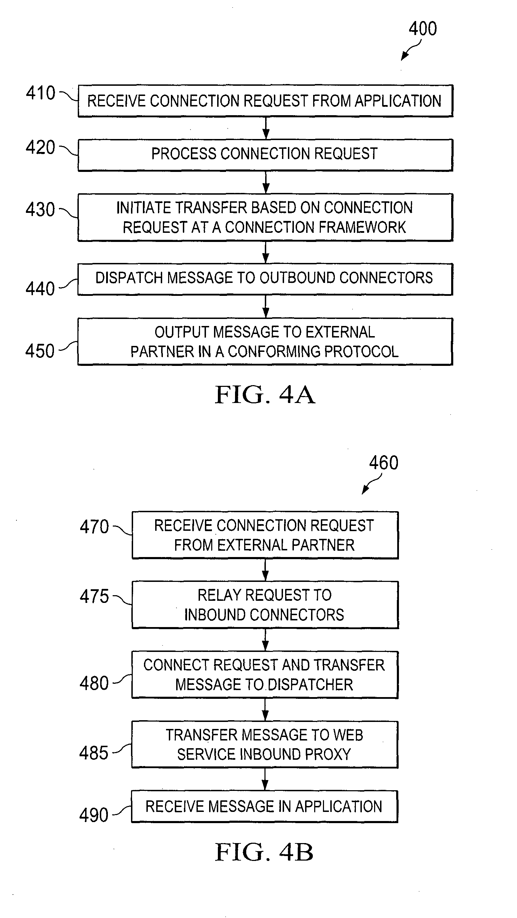

FIG. 4A illustrates an example method 400 for outbound communication using unifying programming models. At 410 a connection request from an application is received. The connection request can include a message, specifications of the message interface, external definition, communication channel, receiver adapter, integration configuration, and other initiation information. At 420, the connection request from the application is processed, for example, by a web service proxy at runtime. The request can be sent to an API for unified communication. The API can be a source code-based specification intended to be used as an interface by software components to communicate with each other. The web service proxy can enable generic add-on features to the request for obtaining server features. At 430, the communication transfer based on the connection request is initiated at a connection framework. The framework can be similar to the connectivity framework 205 or 206 as shown in FIGS. 2 and 3. The framework can include a dispatcher for switching communications between various protocols and outbound connectors for sending out communications in a particular protocol.

At 440, the message sent from the application is dispatched to outbound connectors in the switched protocol. For example, the protocol may be switched from a WS protocol to a XI P2P protocol, or to other protocols such as HTTP, TCP, SMTP, JMS, RFC, REST-based communication, among others. The switching process is performed within a dispatcher module of the connectivity framework, and does not require a central hub that uses a neutral format for conversion. The connectivity framework offers point-to-point communication to improve the efficiency of the connection operation. At 450, the communication is output to an external partner in a protocol conforming to the external partner's requirement. The connectivity framework can be compatible with existing external partner systems that have connectors for communications using various protocols.

Remote Function Call (RFC) refers to a particular implementation of Remote Procedure Call (RPC). RFC may be further understood with reference to US 2013/0117414.

FIG. 4B illustrates an example method 460 for inbound communication using unifying programming models. At 470, a connection request from an external partner is received at external connectors. The external connectors can receive communications in various protocols and relay the communication request to inbound connectors at 475. The inbound connectors can then send the communication and/or related data to an agent/dispatcher. The agent/dispatcher can further send the communication to a web service inbound proxy at 485. At 490, the web service inbound proxy sends the communication to the inbound application. In some implementations, the method 460 may be used in conjunction with the method 400 for two-way communications. The method 460 may use similar hardware and software as used in the method 400.

A number of implementations have been described. Nevertheless, it will be understood that various modifications may be made. For example, other methods described herein besides or in addition to that illustrated in FIGS. 4A and 4B may be performed. Further, the illustrated steps of method 400 or 460 may be performed in different orders, either concurrently or serially. Further, steps may be performed in addition to those illustrated in method 400 or 460, and some steps illustrated in method 400 or 460 may be omitted without deviating from the present disclosure. Accordingly, other implementations are within the scope of the following claims.

## Claims

1. A method performed with a distributed computing environment for connecting an application with an external partner, the method comprising:
receiving, at a first computing system in the distributed computing environment, a message in a first protocol, the message associated with a connection request received from a second computing system in the distributed computing environment;
transforming, in a communication framework of the first computing system, the first protocol of the message into a second protocol of the message using a point-to-point communication of the communication framework; and
outputting the message in the second protocol.

2. The method of claim 1, further comprising:
receiving a connection request from an application; and
processing the connection request using a web service proxy at runtime.

3. The method of claim 1 or 2, further comprising:
dispatching the message in the second protocol to a plurality of connectors; and
outputting the first message in the second protocol to an external partner via the plurality of connectors.

4. The method of claim 1, further comprising:
receiving a connection request from an external partner with a plurality of connectors, the plurality of connectors adapted to various protocols; and
processing the connection request using a web service proxy at runtime.

5. The method of claim 3, further comprising:
receiving the message at one of the plurality of connectors in the first protocol, the message associated with the connection request; and
outputting the message in the second protocol to an application.

6. The method of any one of the preceding claims, wherein the first protocol comprises a web service (WS) protocol and the second protocol comprises one of an exchange infrastructure (XI) protocol, a JMS protocol, an SMTP protocol, a TCP protocol, or an RFC protocol.

7. The method of any one of claims 1 to 5, wherein the first protocol comprises an XI protocol and the second protocol comprises one of a WS protocol, a JMS protocol, an SMTP protocol, a TCP protocol, or an RFC protocol.

8. A computer storage medium encoded with a computer program, the program comprising instructions that when executed by one or more computers cause the one or more computers to perform operations according to any one of the preceding claims.

9. A system of one or more computers configured to perform operations comprising:
receiving, at a first computing system in the distributed computing environment, a message in a first protocol, the message associated with a connection request received from a second computing system in the distributed computing environment;
transforming, in a communication framework of the first computing system, the first protocol of the message into a second protocol of the message using a point-to-point communication of the communication framework; and
outputting the message in the second protocol.

10. The system of claim 9, wherein the operations further comprise:
receiving a connection request from an application;
processing the connection request using a web service proxy at runtime;
dispatching the message in the second protocol to a plurality of connectors; and
outputting the first message in the second protocol to an external partner via the plurality of connectors.

11. The system of claim 9, wherein the operations further comprise:
receiving a connection request from an external partner with a plurality of connectors, the plurality of connectors adapted to various protocols; and
processing the connection request using a web service proxy at runtime.

12. The system of claim 10 or 11, wherein the operations further comprise:
receiving the message at one of the plurality of connectors in the first protocol, the message associated with the connection request; and
outputting the message in the second protocol to an application.

13. The system of any one of claims 9 to 12, wherein the first protocol comprises a web service (WS) protocol and the second protocol comprises one of an exchange infrastructure (XI) protocol, an HTTP protocol, a JMS protocol, an SMTP protocol, a TCP protocol, or an RFC protocol.

14. The system of any one of claims 9 to 12, wherein the first protocol comprises an XI protocol and the second protocol comprises one of a WS protocol, an HTTP protocol, a JMS protocol, an SMTP protocol, a TCP protocol, or an RFC protocol.
